(19) **Europäisches Patentamt / European Patent Office / Office européen des brevets**

(11) **EP 3 977 785 B1**

(12) **FASCICULE DE BREVET EUROPEEN**

(45) Date de publication et mention de la délivrance du brevet:
**25.06.2025 Bulletin 2025/26**

(21) Numéro de dépôt: **20723432.9**

(22) Date de dépôt: **11.05.2020**

(51) Classification Internationale des Brevets (IPC):
*H04W 52/14* (2009.01)     *H04W 52/28* (2009.01)
*H04W 52/36* (2009.01)     *H04W 52/24* (2009.01)
*H04W 52/16* (2009.01)     *H04W 16/30* (2009.01)

(52) Classification Coopérative des Brevets (CPC):
**H04W 52/146; H04W 16/30; H04W 52/16; H04W 52/283; H04W 52/362;** H04B 17/27

(86) Numéro de dépôt international:
**PCT/EP2020/062999**

(87) Numéro de publication internationale:
**WO 2020/239413 (03.12.2020 Gazette 2020/49)**

(54) **PROCÉDÉ DE SÉLECTION PARMI UNE PLURALITÉ DE VALEURS POSSIBLES DE PUISSANCE D'ÉMISSION DÉTERMINÉES POUR UN ACCES NON COORDONNÉ AU MEDIUM DE COMMUNICATION, ET APPAREILS CORRESPONDANTS**

VERFAHREN ZUR AUSWAHL EINER VIELZAHL VON MÖGLICHEN ÜBERTRAGUNGSLEISTUNGSWERTEN, DIE FÜR DEN UNKOORDINIERTEN ZUGRIFF AUF EIN KOMMUNIKATIONSMEDIUM BESTIMMT SIND, UND ZUGEHÖRIGE VORRICHTUNGEN

METHOD FOR SELECTING FROM A PLURALITY OF POSSIBLE TRANSMISSION POWER VALUES DETERMINED FOR UNCOORDINATED ACCESS TO A COMMUNICATION MEDIUM, AND CORRESPONDING APPARATUSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.05.2019 FR 1905472**

(43) Date de publication de la demande:
**06.04.2022 Bulletin 2022/14**

(73) Titulaire: **Orange**
**92130 Issy-les-Moulineaux (FR)**

(72) Inventeurs:
• **SELMI, Asma**
**92326 CHÂTILLON CEDEX (FR)**
• **SCHWOERER, Jean**
**92326 CHATILLON CEDEX (FR)**
• **VISOZ, Raphaël**
**92326 CHATILLON CEDEX (FR)**
• **CANCES, Jean-Pierre**
**92326 CHATILLON CEDEX (FR)**

(74) Mandataire: **Vidon Brevets & Stratégie**
**16B, rue de Jouanet**
**BP 90333**
**35703 Rennes Cedex 7 (FR)**

(56) Documents cités:
**US-A1- 2004 266 473     US-A1- 2014 016 576**

## Description

### Domaine de l'invention

Le domaine de l'invention est celui de la gestion de l'accès au médium de communication dans le cadre du déploiement de la cinquième génération de standards pour la téléphonie mobile ou 5G. Plus précisément, l'invention concerne l'accès au médium de communication par des équipements utilisateurs.

### Art antérieur et ses inconvénients

L'Internet des objets (en anglais *Internet of Things,* ou IoT) est l'interconnexion entre l'Internet et des objets dits connectés, tels que, par exemple, des capteurs ou des sondes.

L'un des principaux scénarii de développement de la 5G repose sur l'IoT. Dans un tel scenario, il est attendu qu'un nombre massif d'équipements utilisateurs sera déployé. L'explosion du nombre de ces équipements utilisateurs aura pour conséquence une augmentation des échanges de données entre ces équipements utilisateurs et des équipements d'accès aux réseaux de télécommunication tels que des stations de base ou des points d'accès.

Les données échangées par ces équipements utilisateurs avec des équipements situés dans un réseau de télécommunication sont principalement constituées par des messages de signalisation dont le volume engendre une surcharge significative des ressources du réseau de télécommunication.

Comme la majorité des équipements utilisateurs ne dispose que de ressources radioélectriques et énergétiques limitées, il est important de réduire la fréquence des échanges de données ainsi que le volume de données échangées avec les équipements d'accès.

Dans ce contexte, une solution consiste en la mise en œuvre d'un schéma d'accès aux ressources d'un réseau de télécommunication dit non-coordonné. Un schéma d'accès non-coordonné permet non seulement de réduire la quantité de ressources utilisés par le réseau de télécommunication en réduisant le nombre de messages de signalisation échangés entre les équipements utilisateurs et les équipements d'accès mais encore de ne pas solliciter les ressources radioélectriques et énergétiques limitée des équipements utilisateurs au-delà de leurs capacités.

Un exemple de schéma d'accès non-coordonné pour le sens montant, c'est-à-dire pour des communications depuis un équipement utilisateur vers une station de base, est décrit dans le document J. Choi, « NOMA-based random access with multichannel ALOHA », IEEE Journal on Selected Areas in Commun., vol. 35, no. 12, pp.2736-2743, Dec. 2017. Dans ce document, un schéma de type NOMA (*Non-Orthogonal Multiple Access* ou accès multiple non-orthogonal en français) est mis en œuvre conjointement avec un protocole d'accès aléatoire à canaux multiples tel que le protocole ALOHA. D'autres exemples sont fournis par ailleurs dans les documents US 2014/0016576 et US 2004/266473.

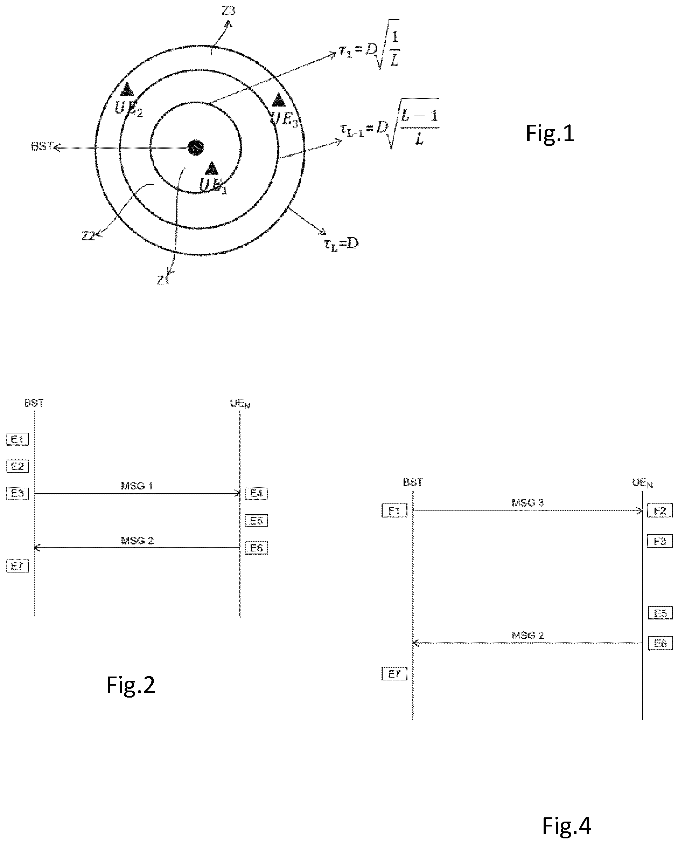

La **[fig. 1]** représente une cellule d'un réseau de communication radio de rayon $D = 1$ *km* comprenant une station de base BST et $K = 200$ équipements utilisateurs UE$_N$, N $\in$ [1, ..., 200], identiquement distribués sur toute la surface de la cellule. Chaque équipement utilisateur UE$_N$ actif, c'est-à-dire qu'il échange des données avec la station de base BST, est associé à une probabilité $p_a$ d'accès à la station de base BST. Ainsi, à un instant donné, la cellule compte un nombre moyen effectif d'équipements utilisateurs actifs $\overline{M} = E\{M\} = Kp_a$. La cellule est subdivisée en $L = 3$ zones, dites zones de puissance Z1, Z2 et Z3, chacune associée à une puissance d'émission de référence. En référence à la **[fig. 1],** les zones de puissance Z1, Z2 et Z3 sont représentées par des cercles concentriques centrés sur la station de base BST.

Les zones de puissance Z1, Z2 et Z3 sont délimitées par des seuils $\{\tau_l\}_{l=1}^{L}$, représentant une distance à la station de base BST. Ces seuils $\tau_l$ sont définis de sorte qu'un équipement utilisateur UE$_N$ a une équiprobabilité d'être situé dans l'une des zones de puissance en satisfaisant la condition : $Pr(k \in Z_l) = \frac{1}{L}$.

En considérant l'hypothèse que les équipements utilisateurs sont uniformément répartis dans la cellule et en négligeant les effets de masques, ces seuils $\tau_l$ sont donnés par :

$$\tau_l^2 - \tau_{l-1}^2 = \frac{D^2}{L}.$$

En prenant $\tau_0 = 0$, il vient :

$$\tau_l = D \sqrt{\frac{l}{L}} \text{ pour } l = 1, ..., L$$

Dans cette solution, chaque équipement utilisateur UE$_N$ sélectionne de manière indépendante une puissance d'émission ainsi qu'une sous-bande de fréquences d'un signal radio qu'il utilisera pour transmettre des données à destination de la station de base BST. La valeur de la puissance d'émission sélectionnée par un équipement utilisateur UE$_N$ dépend du gain moyen en puissance du canal de transmission établi entre l'équipement utilisateur UE$_N$ et la station de base BST. Le gain moyen en puissance du canal de transmission est estimé, par exemple, à l'aide de signaux de référence diffusés de manière périodique par la station de base BST pour gérer l'accès des équipements utilisateurs UE$_N$ au réseau de télécommunication de même que leur mobilité vers d'autres stations de bases.

Les équipements utilisateurs UE$_N$ ont la possibilité de transmettre des données à destination de la station de base BST en émettant des signaux radio dans plusieurs bandes de fréquences différentes. Un tel ensemble de bandes de fréquences est appelé $B$. L'ensemble d'index des utilisateurs actifs qui transmettent dans la sous-bande de fréquence $i$ est désigné par $\mathcal{J}_i$. Avec cette hypothèse les signaux radio reçus par la station de base BST s'écrivent sous la forme :

$$y_i = \sum_{k \in \mathcal{J}_i} h_{i,k} \sqrt{P_{i,k}} s_{i,k} + n_i \ (1)$$

où $h_{i,k}$ représente le canal de transmission de l'équipement utilisateur $k$ dans la sous-bande de fréquence $i$, $P_{i,k}$ représente la puissance de transmission allouée à l'émission d'un signal radio par l'équipement utilisateur $k$ dans cette sous-bande de fréquences $i$ et $S_{i,k}$ représente les symboles modulés transmis par l'équipement utilisateur $k$ dans cette sous-bande de fréquence $i$. La quantité $n_i$ désigne classiquement le bruit additif du canal de transmission avec $n_i \sim \mathcal{CN}(0, N_0)$.

Le canal de transmission $h_{i,k}$ peut alors être décomposé sous la forme suivante :

$$h_{i,k} = \alpha_k \beta_{i,k} \ (2) \text{ avec : } \alpha_k \in \mathbb{R}^+, \beta_{i,k} \in \mathbb{C}$$

La quantité $\alpha_k^2 = \mathbb{E}\left\{|h_{i,k}|^2\right\}$ est une atténuation correspondant au coefficient d'évanouissement à grand échelle de l'équipement utilisateur $k$ pour toutes les sous-bandes de fréquence. La quantité $\alpha_k^2$ tient compte de l'effet d'éloignement de l'équipement utilisateur $k$ par rapport à la station de base BST et d'un éventuel effet de masque sur la propagation du signal radio dû par exemple à la présence d'un obstacle situé entre l'équipement utilisateur $k$ et la station de base BST.

L'effet d'éloignement est caractérisé par une loi en $A_0 d_k^{-\beta}$ où $0 < d_k \leq D$ est la distance entre l'équipement utilisateur $k$ et la station de base BST, $\beta$ est l'exposant de l'affaiblissement de parcours et $A_0$ est une constante.

La quantité $\beta_{i,k}$ représente le coefficient d'évanouissement à petite échelle de l'équipement utilisateur $k$ dans la sous-bande de fréquences $i$, elle représente l'effet des trajets multiples et l'on a la relation : $\mathbb{E}\left\{|\beta_{i,k}|^2\right\} = 1$.

Dans la suite du document, une hypothèse simplificatrice est faite qui consiste à négliger l'évanouissement rapide ce qui revient à dire que $\beta_{i,k} = 1$. De plus, en ce qui concerne la définition des zones de puissance Z1, Z2 et Z3 seul l'effet de la distance entre un équipement utilisateur UE$_N$ et la station de base BST est pris en compte.

Dans cette solution, chaque équipement utilisateur UE$_N$ choisit sa zone de puissance en prenant en compte son éloignement à la station de base BST. Cet effet est compris dans le coefficient estimé $\alpha_k^2$ à partir des signaux de référence transmis par la station de base BST.

Lorsque $B$ sous-bandes de fréquences sont disponibles et que dans chacune d'elles un processus NOMA est appliqué, le nombre de sous-canaux de transmission est égal à $B \times L$. Dans la suite, seule une sous-bande de fréquences donnée est considérée et son indice est omis par souci de simplification des notations.

Un équipement utilisateur $k$ se situant à une distance effective $\tau_{l-1} < d_k \leq \tau_l$ de la station de base BST sélectionne une puissance d'émission de référence $v_l$ pour l'émission d'un signal radio à destination de la station de base BST. Une telle puissance d'émission de référence $v_l$ est définie comme suit :

$$v_l = \Gamma(V_l + 1) \ (2)$$

où $\Gamma$ représente le SINR minimal (*Signal plus Interferences to Noise Ratio* ou rapport signal plus interférence sur bruit) requis pour permettre le décodage du signal radio transmis par la station de base BST avec un taux de transmission donné, c'est-à-dire un schéma de modulation et de codage de rendement R en nombre de bits par utilisation de canal b.p.c.u. et où

$V_l$ pour $l \in [1, ..., L]$, est donné par :

$$V_l = \sum_{m=l+1}^{L} v_m \, , \ l \in [1, L-1], (3)$$

et, pour $l = L, V_L = 0$

Il vient, par récurrence en utilisant (2) et (3), que

$$v_l = \Gamma(\Gamma + 1)^{L-l} \, , l \in [1, L] \ (4)$$

En d'autres termes, puisque $v_1 > v_2 > ... > v_L$ et $\tau_L > \tau_{L-1} > ... > \tau_1$, les équipements utilisateurs UE$_N$ situés loin de la station de base BST sélectionnent des niveaux de puissances d'émission moins élevés que les équipements utilisateurs UE$_N$ situés proches de la station de base BST pour émettre des signaux radio à destination de cette dernière.

L'équipement utilisateur $k$, après avoir sélectionné une puissance d'émission de référence $v_l$, transmet ce signal radio avec la puissance d'émission par symbole transmis suivante :

$$P_k = \frac{v_l}{\alpha_k^2} (5)$$

La station de base BST comprend un récepteur à annulation successive d'interférences qui lui permet de séparer les différents signaux radio émis par les équipements utilisateurs UE$_N$ actifs dans la cellule. En supposant une puissance de bruit normalisée à un (c.à.d. $N_0 = 1$) et que tous les équipements utilisateurs UE$_N$ actifs choisissent des niveaux de puissance d'émission différents pour émettre des signaux radio à destination de la station de base BST, la station de base BST est capable de décoder sans erreur tous les signaux radio reçus avec le rapport SINR $\Gamma$ minimal.

La valeur du SINR d'un équipement utilisateur qui a choisi une puissance d'émission $v_l$ est donné par :

$$\frac{v_l}{\sum_{m=l+1}^{L} v_m + 1} (6)$$

ce qui correspond au rapport SINR $\Gamma$ minimal lorsque les équations (2) et (3) sont appliquées.

En considérant un taux de transmission R = $\log_2(\Gamma + 1)$, tous les signaux radio émis par les équipements utilisateurs UE$_N$ actifs peuvent alors être itérativement décodés par la station de base en mettant en œuvre une méthode d'annulation successive d'interférences dans un ordre descendant.

Dans cette solution, afin que la station de base BST puisse décoder tous les signaux radio émis par les $M$ équipements utilisateurs UE$_N$ actifs, il est nécessaire de disposer d'un nombre de niveaux de puissance d'émission $L$ supérieur ou égal à $M$. De plus il doit y avoir au plus un seul équipement utilisateur UE$_N$ par zone de puissance. Ainsi afin de pouvoir satisfaire les besoins en connectivité dans une cellule d'un réseau de télécommunication conforme à la 5G, $L$ doit être de l'ordre de quelques dizaines voire quelques centaines de niveaux. Cette hypothèse conduit à utiliser des niveaux de puissance de transmission exponentiels en fonction de $L$ comme indiqué par l'équation (4) ci-dessus. L'utilisation de tels niveaux de puissance d'émission dépasse la capacité des équipements utilisateurs UE$_N$ utilisés qui sont généralement des capteurs ayant des capacités restreintes dues à la faiblesse des coûts de ces équipements.

Même si les niveaux de puissance d'émission étaient judicieusement choisis afin d'assurer une diversité en SINR garantissant le décodage de tous les signaux superposés reçus par la station de base BST, l'écart entre deux niveaux de puissances d'émission successifs reste grand et augmente avec $L$.

Par ailleurs, dans la solution décrite ci-dessus, il est supposé que les équipements utilisateurs UE$_N$ ont connaissance de la valeur de $|h_{i,k}|^2$ alors que, dans la pratique, les équipements utilisateurs UE$_N$ ont uniquement connaissance de la valeur du coefficient $\alpha_k^2$. Ainsi, une telle solution semble difficilement applicable dans le cas d'un accès massif d'objets connectés aux ressources d'un réseau de télécommunication.

Il existe par conséquent un besoin d'une solution permettant un accès massif d'équipements utilisateurs aux ressources d'un réseau de télécommunication ne présentant pas ces inconvénients.

**Exposé de l'invention**

L'invention est définie par les revendications indépendantes. Les revendications dépendantes couvrent des modes particuliers de réalisation de l'invention.

L'invention répond à ce besoin en proposant un procédé de sélection d'une valeur de puissance d'émission d'un signal radio mis en œuvre par au moins un équipement utilisateur situé dans une première zone de puissance d'émission définie autour d'une station de base à laquelle ledit équipement utilisateur est attaché, ledit procédé comprenant les étapes suivantes de :

- obtention d'une pluralité de valeurs de puissance d'émission possibles pour ladite première zone de puissance d'émission, lesdites valeurs possibles de puissance d'émission pour ladite première zone étant déterminées en fonction d'au moins :

    * une valeur de puissance d'émission de référence pour ladite première zone de puissance d'émission,
    * une valeur de puissance d'émission de référence pour au moins une deuxième zone de puissance d'émission définie autour de ladite station de base et adjacente à la première zone de puissance d'émission,
    * une valeur d'un pas de discrétisation définissant un niveau de disparité entre les valeurs de puissances possibles par zone de puissance, et

- sélection d'une valeur de puissance d'émission parmi ladite pluralité de valeurs possibles de puissance d'émission pour ladite première zone de puissance d'émission.

En proposant aux différents équipements utilisateurs de pouvoir sélectionner une valeur de puissance d'émission parmi un ensemble de valeurs de puissances d'émission possible en fonction de leur localisation par rapport à la station de base, la solution de l'invention permet à la station de base de décoder les signaux radio émis par un plus grand nombre d'équipement utilisateurs.

Une telle solution permet, par conséquent, un accès massif d'équipements utilisateurs aux ressources d'un réseau de télécommunication tout en limitant les risques d'échec d'un décodage des signaux radio reçus par la station de base.

Selon une première variante d'implémentation du procédé de sélection, la sélection d'une valeur de puissance d'émission parmi ladite pluralité de valeurs possibles de puissance d'émission pour ladite première zone de puissance d'émission se fait selon une loi de probabilité discrète.

Ainsi on limite les risques que différents équipements utilisateurs situés dans une même zone de puissance d'émission sélectionnent une même valeur de puissance d'émission. Cette solution permet d'assurer que chaque équipement utilisateur accède aux ressources du réseau de télécommunication.

Selon une deuxième variante d'implémentation du procédé de sélection, l'étape d'obtention de la pluralité de valeurs de puissance d'émission possibles pour ladite première zone de puissance d'émission consiste en la réception d'au moins un message émis par la station de base comprenant ladite pluralité de valeurs possibles de puissance d'émission pour ladite première zone de puissance d'émission.

Cette solution présente un intérêt lorsque l'équipement utilisateur est par exemple un objet connecté de type capteur avec des capacités de calculs limitées.

Selon une combinaison de la première et de la deuxième variantes d'implémentation du procédé de sélection, au moins un message émis par la station de base comprend également la loi de probabilité discrète selon laquelle une valeur de puissance d'émission est sélectionnée parmi ladite pluralité de valeurs de puissance d'émission possibles pour ladite première zone de puissance d'émission.

Selon une troisième variante d'implémentation du procédé de sélection, l'étape d'obtention de la pluralité de valeurs possibles de puissance d'émission pour ladite première zone de puissance d'émission consiste en :

- la réception d'au moins un message émis par la station de base comprenant, entre autre, la valeur de puissance d'émission de référence pour ladite première zone de puissance d'émission, la valeur de puissance d'émission de référence pour au moins une deuxième zone de puissance d'émission définie autour de ladite station de base et adjacente à la première zone de puissance d'émission, une valeur d'un pas de discrétisation définissant un niveau de disparité entre les valeurs de puissances possibles,
- la détermination desdites valeurs possibles de puissance d'émission pour ladite première zone en fonction des données comprises dans ledit au moins un message reçu.

Dans une telle implémentation, l'équipement utilisateur effectue lui-même tous les calculs en lieu et place de la station de base. Cela permet de libérer des ressources au niveau de la station de base.

Selon une combinaison de la première et de la troisième variantes d'implémentation du procédé de sélection, celui-ci comprend en outre une étape de détermination de la loi de probabilité discrète selon laquelle une valeur de puissance d'émission est sélectionnée parmi ladite pluralité de valeurs possibles de puissance d'émission pour ladite première zone de puissance d'émission en fonction de paramètres relatifs à ladite loi de probabilité discrète compris dans le au moins un message reçu.

Selon une quatrième variante d'implémentation du procédé de sélection, le procédé de sélection comprend préalablement à l'étape d'obtention :

- une étape de mesure de signaux radio de référence transmis par la station de base

- une étape de détermination d'un coefficient $\alpha_k^2$ en fonction des signaux de référence

- une étape de détermination, en fonction du coefficient $\alpha_{k'}^2$, d'une distance effective séparant l'équipement utilisateur de la station de base, ladite distance effective identifiant la zone de puissance d'émission dans laquelle l'équipement utilisateur est situé.

L'invention a également pour objet un procédé de détermination d'une pluralité de valeurs possibles de puissance d'émission d'un signal radio, ledit signal radio étant destiné à être émis par au moins un équipement utilisateur situé dans une première zone de puissance d'émission définie autour d'une station de base à laquelle ledit équipement utilisateur est attaché, ledit procédé étant mis en œuvre par la station de base et comprenant les étapes suivantes de :

- détermination de la pluralité de valeurs de puissance d'émission possibles pour ladite première zone de puissance d'émission, lesdites valeurs possibles de puissance d'émission pour ladite première zone étant déterminées en fonction d'au moins :

  * une valeur de puissance d'émission de référence pour ladite première zone de puissance d'émission,
  * une valeur de puissance d'émission de référence pour au moins une deuxième zone de puissance d'émission définie autour de ladite station de base et adjacente à la première zone de puissance d'émission,
  * une valeur d'un pas de discrétisation définissant un niveau de disparité entre les valeurs de puissances possibles, et

- transmission de ladite pluralité de valeurs possibles de puissance d'émission pour ladite première zone de puissance d'émission audit au moins un équipement utilisateur.

Selon une deuxième variante d'implémentation du procédé de détermination, celui-ci comprend en outre :

- une étape de détermination d'une loi de probabilité discrète selon laquelle ledit au moins équipement utilisateur sélectionne une valeur de puissance d'émission parmi ladite pluralité de valeurs possibles de puissance d'émission pour ladite première zone de puissance d'émission,
- une étape de transmission de ladite loi de probabilité discrète audit au moins un équipement utilisateur.

Un autre objet de l'invention est un équipement utilisateur situé dans une première zone de puissance d'émission définie autour d'une station de base à laquelle il est attaché, ledit équipement utilisateur comprenant au moins un processeur configuré pour:

- obtenir une pluralité de valeurs possibles de puissance d'émission d'un signal radio pour ladite première zone de puissance d'émission, lesdites valeurs possibles de puissance d'émission d'un signal radio pour ladite première zone étant déterminées en fonction d'au moins :

  * une valeur de puissance d'émission de référence pour ladite première zone de puissance d'émission,
  * une valeur de puissance d'émission de référence pour au moins une deuxième zone de puissance d'émission définie autour de ladite station de base et adjacente à la première zone de puissance d'émission,
  * une valeur d'un pas de discrétisation définissant un niveau de disparité entre les valeurs de puissances possibles, et

- sélectionner une valeur de puissance d'émission d'un signal radio parmi ladite pluralité de valeurs possibles de puissance d'émission d'un signal radio pour ladite première zone de puissance d'émission.

Un tel équipement utilisateur peut être un téléphone mobile ou un objet connecté tel qu'un capteur de température, un capteur de mouvement, une voiture connectée, etc.

L'invention concerne également une station de base capable de déterminer une pluralité de valeurs de puissance d'émission d'un signal radio possibles, ledit signal radio étant destiné à être émis par au moins un équipement utilisateur situé dans une première zone de puissance d'émission définie autour de ladite station de base à laquelle ledit équipement utilisateur est attaché, la station de base comprenant au moins un processeur configuré pour :

- déterminer la pluralité de valeurs de puissance d'émission possibles pour ladite première zone de puissance d'émission, lesdites valeurs possibles de puissance d'émission pour ladite première zone étant déterminées en fonction d'au moins :

    * une valeur de puissance d'émission de référence pour ladite première zone de puissance d'émission,
    * une valeur de puissance d'émission de référence pour au moins une deuxième zone de puissance d'émission définie autour de ladite station de base et adjacente à la première zone de puissance d'émission,
    * une valeur d'un pas de discrétisation définissant un niveau de disparité entre les valeurs de puissances possibles, et

- transmettre ladite pluralité de valeurs possibles de puissance d'émission pour ladite première zone de puissance d'émission audit au moins un équipement utilisateur.

L'invention concerne enfin des produits programme d'ordinateur comprenant des instructions de code de programme pour la mise en œuvre des procédés tels que décrits précédemment, lorsqu'ils sont exécutés par un processeur.

L'invention vise également un support d'enregistrement lisible par un ordinateur sur lequel sont enregistrés des programmes d'ordinateur comprenant des instructions de code de programme pour l'exécution des étapes des procédés selon l'invention tels que décrits ci-dessus.

Un tel support d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que les programmes d'ordinateur qu'il contient sont exécutables à distance. Les programmes selon l'invention peuvent être en particulier téléchargés sur un réseau par exemple le réseau Internet.

Alternativement, le support d'enregistrement peut être un circuit intégré dans lequel les programmes sont incorporés, le circuit étant adapté pour exécuter ou pour être utilisé dans l'exécution des procédés objets de l'invention précités.

## Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :

[fig. 1] : cette figure représente une cellule d'un réseau de communication radio dans laquelle une solution de l'état de l'art est mise en œuvre,

[fig. 2] : cette figure représente les étapes d'un procédé de sélection d'une valeur de puissance d'émission d'un signal radio selon un premier mode de réalisation de l'invention,

[fig. 3] : cette figure représente une fonction de masse de probabilité P(.),

[fig. 4] : cette figure représente les étapes d'un procédé de sélection d'une valeur de puissance d'émission d'un signal radio selon un deuxième mode de réalisation de l'invention,

[fig. 5] : cette figure représente le nombre moyen d'équipements utilisateurs $UE_N$ qui arrivent à transmettre avec succès leurs paquets de données, ou *normalized throughput* sur la figure, en fonction de la charge du réseau, ou *average traffic load* sur la figure,

[fig. 6] : cette figure représente un équipement utilisateur selon un mode de réalisation de l'invention,

[fig. 7] : cette figure représente une station de base selon un mode de réalisation de l'invention.

**Description détaillée de modes de réalisation de l'invention**

L'invention est également mise en œuvre dans une cellule d'un réseau de communication radio de rayon $D$ comprenant une station de base BST et $K$ équipements utilisateurs $UE_N$, $N \in [1, ..., K]$, identiquement distribués sur toute la surface de la cellule telle que décrite en référence à la **[fig. 1]**. Chaque équipement utilisateur $UE_N$ actif, c'est-à-dire qu'il échange des données avec la station de base BST, est associé à une probabilité d'accès à la station de base BST $p_a$. Ainsi, à un instant donné, la cellule compte un nombre moyen effectif d'équipements utilisateurs actifs $\overline{M} = E\{M\} = Kp_a$. La cellule est subdivisée en $L = 3$ zones, dites zones de puissance Z1, Z2 et Z3, chacune associée à une puissance d'émission de référence.

Les zones de puissance Z1, Z2 et Z3 sont délimitées par des seuils $\{\tau_l\}_{l=1}^{L}$ représentant une distance à la station de base BST. Ces seuils $\tau_l$ sont définis de sorte qu'un équipement utilisateur $UE_N$ a une équiprobabilité d'être situé dans l'une des zones de puissance Z1, Z2 et Z3 en satisfaisant la condition : $Pr(k \in Z_l) = \frac{1}{L}$, sous l'hypothèse d'une distribution uniforme des équipements utilisateurs $UE_N$ dans la cellule.

Le principe général de l'invention repose sur le fait que chaque zone de puissance Z1, Z2 et Z3 est associée à un ensemble de $n_l$ valeurs de puissances d'émission discrètes, dites valeurs de puissance possibles, situées autour de la valeur d'une puissance d'émission de référence $v_l$ de la zone de puissance considérée. Chaque équipement utilisateur $UE_N$ situé dans une zone de puissance Z1, Z2 et Z3 sélectionne une valeur de puissance d'émission $X$ parmi les valeurs de puissances possibles $\{v_{l,n}\}_{n=1}^{n_l}$.

Les valeurs de puissance possibles sont distribuées autour de la valeur d'une puissance d'émission de référence $v_l$ selon une distribution de probabilité discrète $f_{v_l} = \{Pr(X = v_{l,1}), ..., Pr(X = v_{l,n_l})\}$ où $Pr(X = v_{l,n})$ donne la probabilité qu'un équipement utilisateur $UE_N$ situé dans la zone de puissance dont la puissance d'émission de référence est $v_l$ sélectionne une valeur de puissance d'émission égale à $v_{l,n}$.

La cellule étant divisée en trois zone de puissances Z1, Z2 et Z3, il y a donc $L = 3$ niveaux de puissances d'émission distincts. Dans la suite du document, il y a $M_i = 3$ équipements utilisateurs $UE_N$ pour une sous-bande de fréquence $i$ considérée.

Les trois zones de puissance Z1, Z2 et Z3 sont associées aux valeurs de puissance d'émission possibles $\{v_{1,n}\}_{n=1}^{6}$, $\{v_{2,n}\}_{n=1}^{6}$ et $\{v_{3,n}\}_{n=1}^{6}$. Les valeurs de puissance d'émission possibles suivent respectivement des distributions de probabilité discrètes $f_{v_1}$, $f_{v_2}$ et $f_{v_3}$.

La **[fig. 2]** représente les étapes d'un procédé de sélection d'une valeur de puissance d'émission d'un signal radio selon un premier mode de réalisation de l'invention.

Dans une étape E1, la station de base BST détermine les différentes valeurs de puissance d'émission possibles pour les différentes zones de puissance d'émission Z1, Z2, Z3.

Pour ce faire, la station de base BST détermine tout d'abord un intervalle $I_l$ dans lequel les valeurs de puissance d'émission possibles s'étalent.

Les valeurs des bornes de l'intervalle $I_l$ sont donné par :

$$I_l = \begin{cases} \left[ v_l - \frac{v_l - v_{l+1}}{2} \ v_l + \frac{v_{l-1} - v_l}{2} \right], v_0 = v_1 \text{ pour } l = 1..L-1 \\ \left[ V_l \ v_l + \frac{v_{l-1} - v_l}{2} \right] \text{ pour } l = L \end{cases} \quad (7).$$

Le nombre de valeurs de puissance d'émission possibles pour une zone de puissance d'émission Z donnée est choisi de telle sorte à respecter la proportionnalité entre les deux intervalles $\left[ \frac{v_l - v_{l+1}}{2} \ v_l \right]$ et $\left[ v_l \ \frac{v_{l-1} - v_l}{2} \right]$ situés des deux côtés de la distribution de probabilité centrée autour de la valeur de la puissance de référence $v_l$ du bornes de l'intervalle $I_l$.

Le nombre maximal de valeurs de puissance d'émission possibles pour chaque zone de puissance d'émission Z est par exemple égal au nombre d'équipements utilisateurs $UE_N$ actifs moyen $\overline{M}$.

Connaissant le nombre maximal de valeurs de puissance d'émission possibles pour une zone de puissance d'émission Z et connaissant les bornes de l'intervalle $I_l$, la station de base BST détermine ensuite les différentes valeurs de puissance d'émission possibles pour une zone de puissance d'émission Z. Pour cela, un pas de discrétisation $\Delta_l = \frac{T_l}{\overline{M}}$, où

$T_l$ représente la largeur de l'intervalle $I_l$, est déterminé pour une zone de puissance d'émission Z. Un tel pas de discrétisation $\Delta_l$ permet d'offrir un certain niveau de disparité entre les valeurs de puissances possibles augmentant ainsi la probabilité que la station de base BST sépare tous les signaux radio reçus en vu de leur décodage.

Un seuil minimal de pas de discrétisation indépendant de la valeur $\overline{M}$, noté $\Delta$, est défini. Si le pas de discrétisation $\Delta_l$ est inférieur ou égal au seuil minimal de pas de discrétisation $\Delta$, alors, c'est la valeur seuil minimal de pas de discrétisation $\Delta$ qui est utilisée pour déterminer les différentes valeurs de puissance d'émission possibles pour la zone de puissance d'émission Z afin de garantir un niveau de disparité minimal entre les valeurs de puissances possibles dans chaque zone de puissance d'émission Z.

Dans une étape E2, la station de base BST détermine une loi de probabilité discrète selon laquelle les équipements utilisateurs $UE_N$ situés dans une zone de puissance d'émission donnée sélectionnent une valeur de puissance d'émission parmi la pluralité de valeurs de puissance d'émission possibles pour la zone de puissance d'émission dans laquelle ils se situent.

Dans l'exemple suivant, la loi de probabilité discrète selon laquelle les équipements utilisateurs $UE_N$ sélectionnent une valeur de puissance d'émission parmi la pluralité de valeurs de puissance d'émission possibles est une distribution normale des valeurs discrètes. Bien sûr, toute loi de probabilité discrète peut être utilisée lors de la mise en œuvre du procédé de sélection selon le premier mode de réalisation de l'invention.

Ainsi, pour une loi normale, la fonction de masse de probabilité ($\mathcal{P}(.)$ d'une valeur de puissance d'émission possible $v_{l,n}$ est donnée par :

$$\mathcal{P}\big(X = v_{l,n}\big) = f\big(v_{l,n} \backslash v_l, \sigma_l\big) = \frac{1}{A} \frac{1}{\sqrt{2\Pi\sigma_l^2}} e^{-\frac{(v_{l,n}-v_l)^2}{2\sigma_l^2}} \quad (8)$$

$$A = \sum_{n=1}^{n_l} \frac{1}{\sqrt{2\Pi\sigma_l^2}} e^{-\frac{(v_{l,n}-v_l)^2}{2\sigma_l^2}}$$

où $A$ est une constante de normalisation qui vaut                                        .

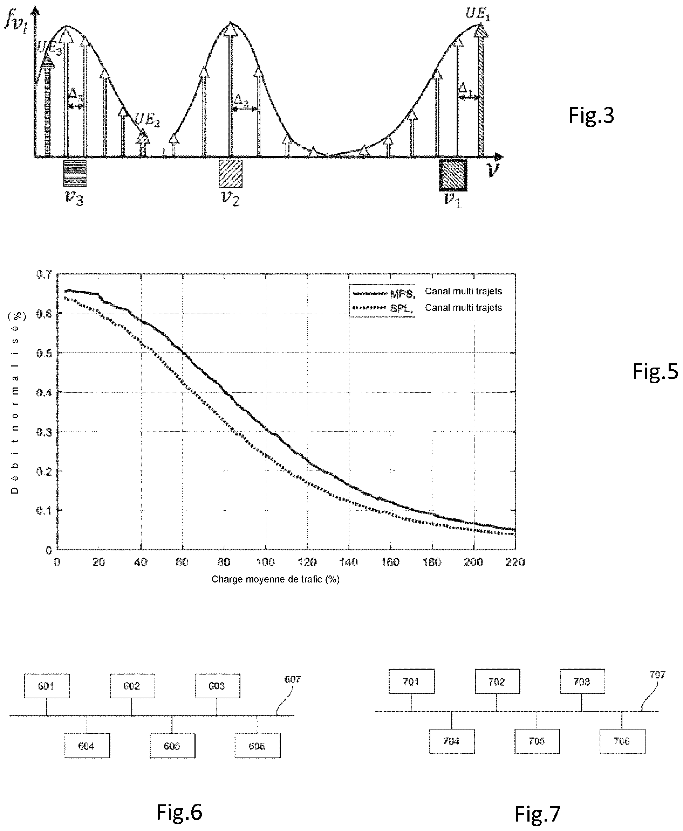

La déviation de la gaussienne $\sigma_l$, est choisie, par exemple, tel que 68% des valeurs de puissance d'émission possibles sont comprises dans l'intervalle $\big[v_l - \sigma_l^2 \ v_l + \sigma_l^2\big]$. Une telle fonction de masse de probabilité ($\mathcal{P}(.)$ est représentée la [fig. 3].

Les calculs effectués par la station de base BST au cours des étapes E1 et E2 correspondent à l'algorithme suivant :

**If** $\Delta_l \geq \Delta$,

$n_l^- \leftarrow \left\lceil \frac{v_{l-1}-v_l}{v_{l-1}-v_{l+1}} (\overline{M}-1) \right\rceil$ où $n_l^-$ représente le nombre de valeurs de puissance d'émission possible supérieures à $v_l$, et la notation $\lceil . \rceil$ signifie arrondi à l'entier par valeur supérieure le plus proche

Discretize $\big[v_l - (\overline{M}-1-n_l^-)\Delta_l \ v_l + \Delta_l n_l^-\big]$ using $\Delta_l$

Output : $\big\{v_{l,n}\big\}_{n=1}^{n_l} \sim f_{v_l} = \big\{\mathcal{P}\big(X = v_{l,n}\big)\big\}_{n=1}^{n_l}$

**Else**

Discretize $\big[v_l - \frac{v_l-v_{l+1}}{2} \ v_l + \frac{v_{l-1}-v_l}{2}\big]$ using $\Delta$

Output : $\big\{v_{l,n}\big\}_{n=1}^{n_l} \sim f_{v_l} = \big\{\mathcal{P}\big(X = v_{l,n}\big)\big\}_{n=1}^{n_l}$

**End**

Dans une étape E3, la station de base BST diffuse au moins un message MGS1 à destination des équipements utilisateurs $UE_N$. Le message MSG1 comprend les différentes valeurs de puissance d'émission possibles pour chacune des zones de puissance d'émission Z1, Z2 et Z3 ainsi que les fonctions de masse de probabilité $\mathcal{P}(X = v_{l,n})$ correspondantes.

Dans une étape E4, un équipement utilisateur $UE_N$ reçoit le message MGS1 diffusé par la station de base BST.

Dans une étape E5, un équipement utilisateur UE$_N$ sélectionne une valeur de puissance d'émission parmi les valeurs de puissance d'émission possibles pour zone de puissance d'émission dans laquelle il se situe.

Dans une étape E6, un équipement utilisateur UE$_N$ transmet un signal radio avec la puissance d'émission par symbole transmis correspondant à la valeur de la puissance d'émission possible sélectionnée au cours de l'étape E5.

Préalablement à chaque émission d'un signal radio, un équipement utilisateur UE$_N$ met à jour la valeur du coefficient $\alpha_k^2$ sur la base de signaux radio de référence transmis par la station de base BST. Le coefficient $\alpha_k^2$ est estimé, par exemple, à partir des signaux de référence transmis par la station de base BST. Le coefficient $\alpha_k^2$ représente, en autre, un effet de masque pouvant être dû à la présence d'un obstacle situé entre l'équipement utilisateur UE$_N$ et la station de base BST, et l'éloignement de l'équipement utilisateur UE$_N$ à la station de base BST. Un tel effet de masque est caractérisé généralement par une loi log-normale :

$$f(x; \mu, \sigma) = \frac{1}{x\sigma\sqrt{2\pi}} \exp\left[-\frac{(\ln(x) - \mu)^2}{2\sigma^2}\right]$$

L'équipement utilisateur UE$_N$ déduit de la valeur du coefficient $\alpha_k^2$ mise à jour, la distance effective $d_k$ qui le sépare de la station de base BST ainsi que la zone de puissance d'émission dans laquelle il est situé de la manière suivante :

$$d_k = \left(\frac{A_0}{\alpha_k^2}\right)^{\frac{1}{\beta}}$$

Si la valeur de la puissance d'émission possible sélectionnée $P_k$ est strictement supérieure à une valeur de puissance maximale $P_{max}$ de l'équipement utilisateur UE$_N$ alors l'équipement utilisateur UE$_N$ transmet le signal radio avec une puissance d'émission dont la valeur est $P_{max}$. Le SINR associé à ce signal radio est alors calculé comme suit

$$\bar{\gamma}_k = \frac{P_{\max}\alpha_k^2}{\sum_{m=l+1}^{L} v_m + 1}$$

Dans un exemple d'implémentation, à réception du message MSG1, l'équipement utilisateur UE$_1$, situé dans la zone de puissance d'émission Z1, sélectionne la valeur de puissance d'émission $v_{1,6} = v_1$, tandis que les équipements utilisateurs UE$_2$ et UE$_3$ situés tous deux dans la zone de puissance d'émission Z3, sélectionnent respectivement les valeurs de puissance d'émission possibles $v_{3,1}$ et $v_{3,6}$ distinctes l'une de l'autre.

Les trois équipements utilisateurs UE$_1$, UE$_2$ et UE$_3$ émettent chacun un message MGS2 à destination de la station de base. Ces trois messages sont émis respectivement aux puissances d'émission $v_1$, $v_{3,1}$ et $v_{3,6}$.

Dans une étape E7, la station de base BST reçoit les signaux radio émis par les trois équipements utilisateurs UE$_1$, UE$_2$ et UE$_3$.

Le processus d'annulation d'interférences successives mis en œuvre par la station de base BST commence par décoder le signal radio émis par l'équipement utilisateur UE$_1$ car c'est celui ayant la puissance reçue maximale.

Le SINR associé à ce signal radio est calculé comme suit :

$$\gamma_1 = \frac{P_1\alpha_1^2}{P_2\alpha_2^2 + P_3\alpha_3^2 + 1} = \frac{v_{1,6}}{v_{3,6} + v_{3,1} + 1} = \frac{v_1}{v_3 + 4\Delta_3 + v_3 - \Delta_3 + 1}$$
$$= \frac{\Gamma(\Gamma(v_3 + 1) + v_3 + 1)}{2v_3 + 3\Delta_3 + 1} \quad (9)$$

Il apparaît que le SINR $\gamma_1$ du signal radio émis par l'équipement utilisateur UE$_1$ est strictement supérieur à $\Gamma$ si $\Delta_3 \leq \frac{\Gamma^2}{3}$. Pour $\Gamma = 6 \ dB$ et $\Delta = 1$, il est vérifié que $\Delta_3 = 1.997 > \Delta$. Dans ce cas la condition $\Delta_3 \leq \frac{\Gamma^2}{3}$ est satisfaite et le signal radio émis par l'équipement utilisateur UE$_1$ est décodé avec succès par la station de base BST.

Disposant de paramètres représentant le canal de transmission établi entre elle et l'équipement utilisateur UE$_1$,

la station de base BST peut alors soustraire le signal émis par l'équipement utilisateur UE$_1$ déjà décodé des autres signaux radio reçus.

La station de base BST procède alors au décodage du second signal radio dont la puissance d'émission à la valeur la plus élevée, c'est-à-dire le signal radio émis par l'équipement utilisateur UE$_2$.

Le SINR associé à ce signal radio émis par l'équipement utilisateur UE$_2$ est calculé comme suit

$$\gamma_2 = \frac{P_2 \alpha_2^2}{P_3 \alpha_3^2 + 1} = \frac{v_{3,6}}{v_{3,1} + 1} = \frac{v_3 + 4\Delta_3}{v_3 - \Delta_3 + 1} = \frac{\Gamma + 4\Delta_3}{\Gamma - \Delta_3 + 1} \ (10)$$

La station de base BST peut décoder ce second signal radio si $\gamma_2 \geq \Gamma$. Cette condition est satisfaite puisque $\gamma_2$ = 4.01 et que $\Gamma$ = 3.98.

Le signal radio émis par l'équipement utilisateur UE$_3$ quant à lui ne pas pas être décodé par la station de base BST après la soustraction du signal radio émis par l'équipement utilisateur UE$_2$ car $\gamma_3 = \Gamma - \Delta_3$ et est donc strictement inférieur à $\Gamma$.

Si la puissance d'émission maximale d'un équipement utilisateur $k$ est inférieure à la valeur de la puissance d'émission possible sélectionnée $P_k = \frac{v_{l,n}}{\alpha_k^2}$ associé au SINR cible $\Gamma$ alors l'équipement utilisateur $k$ décroit la valeur de SINR jusqu'à atteindre la valeur du SINR cible maximum qu'il peut atteindre en considérant que tous les niveaux de puissance $v_m, m > l$ sont occupés, c'est-à-dire en considérant que tous les équipements utilisateurs associés aux niveaux de puissances d'émission $m < l$ ont été soustraits par la station de base BST lors du décodage. Ainsi l'équipement utilisateur $k$ adapte son débit de transmission $R_k$ proportionnellement à la valeur du SINR $\gamma_k$ de réception estimé dans le cas où il n'y a pas de valeurs de puissance d'émission possible et pour une transmission à pleine puissance $P_{max}$

$$\bar{\gamma}_k = \frac{P_{\max} \alpha_k^2}{\sum_{m=l+1}^{L} v_m + 1}$$

avec dans le cas idéal donné par la théorie de l'information

$$R_k = \log_2(1 + \bar{\gamma}_k)$$

A noter que cet équipement utilisateur génère moins d'interférences sur les autres équipements utilisateurs que dans le cas où il transmet avec la puissance d'émission possible $P_k = \frac{v_{l,n}}{\alpha_k^2}$. En effet, l'équipement utilisateur transmet alors à une puissance d'émission plus basse que celle initialement déterminée sur la base de la valeur du SINR cible $\Gamma$ dans le cas où il y a des valeurs de puissance d'émission possibles, sans que son émission ne gêne le décodage des signaux radio émis par d'autres équipements utilisateurs.

Lorsque la station de base BST est incapable de décoder les signaux superposés dans une sous-bande de fréquence donnée, elle demande leur retransmission en envoyant un message d'acquittement négatif ou NACK aux objets connectés UE$_N$ concernés. Lors de la retransmission de ces signaux radio, les équipements utilisateurs UE$_N$ concernés sélectionnent des valeurs de puissance possibles différentes de celles choisies pour la première transmission afin d'améliorer les chances d'un décodage réussi par la station de base BST.

La **[fig. 4]** représente les étapes d'un procédé de sélection d'une valeur de puissance d'émission d'un signal radio selon un deuxième mode de réalisation de l'invention.

Dans une étape F1, la station de base BST diffuse au moins un message MSG3 à destination des équipements utilisateurs UE$_N$. Le message MSG3 comprend, entre autre, les valeurs de puissance d'émission de référence pour les différentes zone de puissance d'émission Z1, Z2 et Z3, le nombre moyen d'équipements utilisateurs actifs situés les différentes zones de puissance d'émission Z1, Z2 et Z3.

Dans une étape F2, l'équipement utilisateur UE$_N$ détermine les différentes valeurs de puissance d'émission possibles pour les différentes zones de puissance d'émission Z1, Z2, Z3.

Pour ce faire, l'équipement utilisateur UE$_N$ détermine tout d'abord un intervalle $I_l$ dans lequel les valeurs de puissance d'émission possibles d'une zone de puissance d'émission Z s'étalent.

Les valeurs des bornes de l'intervalle $I_l$ sont donné par :

$$I_l = \begin{cases} \left[\nu_l - \frac{\nu_l - \nu_{l+1}}{2} \;\; \nu_l + \frac{\nu_{l-1} - \nu_l}{2}\right], \nu_0 = \nu_1 \text{ pour } l = 1..L-1 \\ \left[\nu_l \;\; \nu_l + \frac{\nu_{l-1} - \nu_l}{2}\right] \text{ pour } l = L \end{cases} \quad (7).$$

Le nombre de valeurs de puissance d'émission possibles pour une zone de puissance d'émission Z donnée est choisi de telle sorte à respecter la proportionnalité entre les deux intervalles $\left[\frac{\nu_l - \nu_{l+1}}{2} \;\; \nu_l\right]$ et $\left[\nu_l \;\; \frac{\nu_{l-1} - \nu_l}{2}\right]$ situés des deux côtés de la distribution de probabilité centrée autour de la valeur de la puissance de référence $\nu_l$ du bornes de l'intervalle $I_l$.

Le nombre maximal de valeurs de puissance d'émission possibles pour chaque zone de puissance d'émission Z est par exemple égal au nombre d'équipements utilisateurs $UE_N$ actifs moyen $\overline{M}$.

Connaissant le nombre maximal de valeurs de puissance d'émission possibles pour une zone de puissance d'émission Z et connaissant les bornes de l'intervalle $I_l$, l'équipement utilisateur $UE_N$ détermine ensuite les différentes valeurs de puissance d'émission possibles pour la zone de puissance d'émission Z. Pour cela, un pas de discrétisation $\Delta_l = \frac{T_l}{\overline{M}}$, où $T_l$ représente la largeur de l'intervalle $I_l$, est déterminé pour la zone de puissance d'émission Z. Un tel pas de discrétisation $\Delta_l$ permet d'offrir un certain niveau de disparité entre les valeurs de puissances possibles et permet d'augmenter la probabilité pour la station de base BST de pouvoir séparer tous les signaux radio reçus.

Un seuil minimal de pas de discrétisation, noté $\Delta$, est défini. Si le pas de discrétisation $\Delta_l$ est inférieur ou égal au seuil minimal de pas de discrétisation $\Delta$, alors, c'est la valeur seuil minimal de pas de discrétisation $\Delta$ qui est utilisée pour déterminer les différentes valeurs de puissance d'émission possibles pour la zone de puissance d'émission Z.

Dans une étape F3, l'équipement utilisateur $UE_N$ détermine une loi de probabilité discrète selon laquelle en fonction de la zone de puissance d'émission dans laquelle il est situé, il sélectionne une valeur de puissance d'émission parmi la pluralité de valeurs de puissance d'émission possibles pour la zone de puissance d'émission dans laquelle il se situe.

Dans l'exemple suivant, la loi de probabilité discrète selon laquelle les équipements utilisateurs $UE_N$ sélectionnent une valeur de puissance d'émission parmi la pluralité de valeurs de puissance d'émission possibles est une distribution normale des valeurs discrètes. Bien sûr, toute loi de probabilité discrète peut être utilisée lors de la mise en œuvre du procédé de sélection selon le premier mode de réalisation de l'invention.

Ainsi, pour une loi normale, la fonction de masse de probabilité ($\mathcal{P}(.)$ d'une valeur de puissance d'émission possible $\nu_{l,n}$ est donnée par :

$$\mathcal{P}(X = \nu_{l,n}) = f(\nu_{l,n} \backslash \nu_l, \sigma_l) = \frac{1}{A} \frac{1}{\sqrt{2\Pi\sigma_l^2}} e^{-\frac{(\nu_{l,n} - \nu_l)^2}{2\sigma_l^2}} \quad (8)$$

où $A$ est une constante de normalisation qui vaut $A = \sum_{n=1}^{n_l} \frac{1}{\sqrt{2\Pi\sigma_l^2}} e^{-\frac{(\nu_{l,n} - \nu_l)^2}{2\sigma_l^2}}$.

La déviation de la gaussienne $\sigma_l$, est choisie, par exemple, tel que 68% des valeurs de puissance d'émission possibles sont comprises dans l'intervalle $\left[\nu_l - \sigma_l^2 \;\; \nu_l + \sigma_l^2\right]$.

Une telle fonction de masse de probabilité ($\mathcal{P}(.)$ est représentée la **[fig. 3].**

Les calculs effectués par l'équipement utilisateur $UE_N$ au cours des étapes F2 et F3 correspondent à l'algorithme suivant :

**If** $\Delta_l \geq \Delta$,

$n_l^- \leftarrow \left\lceil \frac{v_{l-1}-v_l}{v_{l-1}-v_{l+1}} (\bar{M}-1) \right\rceil$ où $n_l^-$ représente le nombre de valeurs de puissance d'émission possible supérieures à $v_l$, et la notation $\lceil . \rceil$ signifie arrondi à l'entier par valeur supérieure le plus proche

Discretize $[v_l - (\bar{M}-1-n_l^-)\Delta_l \; v_l + \Delta_l n_l^-]$ using $\Delta_l$

Output : $\{v_{l,n}\}_{n=1}^{n_l} \sim f_{v_l} = \{\mathcal{P}(X = v_{l,n})\}_{n=1}^{n_l}$

**Else**

Discretize $\left[v_l - \frac{v_l - v_{l+1}}{2} \; v_l + \frac{v_{l-1}-v_l}{2}\right]$ using $\Delta$

Output : $\{v_{l,n}\}_{n=1}^{n_l} \sim f_{v_l} = \{\mathcal{P}(X = v_{l,n})\}_{n=1}^{n_l}$

**End**

L'équipement utilisateur UE$_N$ met ensuite en œuvre les étapes E5 et E6 décrites en référence à la figure 2 et la station de base BST met en œuvre l'étape E7 elle aussi décrite en référence à la figure 2.

La **[fig. 5]** représente le nombre moyen d'équipements utilisateurs UE$_N$ qui arrivent à transmettre avec succès leurs paquets de données, ou *normalized throughput* sur la figure, en fonction de la charge du réseau, ou *average traffic load* sur la figure.

La charge du réseau est donnée par :

$$traffic \; load = \frac{\bar{M}}{LB}$$

Une simulation Monte-Carlo est appliquée en considérant les paramètres de simulations suivants :

$K$ = 200 équipements utilisateurs; $D$ = 1 Km ; $L$ = 12 niveaux de puissances d'émission ; $B$ = 6 sous-bandes de fréquences,

Taux de transmission cible $R$ = 0.5 b.p.c.u correspondant à un SINR cible $\Gamma$ = -3.8 *dB,* Paramètres du canal de transmission : canal de Rayleigh à évanouissement par bloc qui change à chaque nouvelle transmission, mais reste constant pendant les retransmissions associées à une transmission donnée; $A_0$ = 1 ; $\beta$ = 3.5 ,

Pas de limitation de puissance au niveau des équipements utilisateurs,

La sous-bande de fréquences est choisie indépendamment et suivant une distribution de probabilité discrète uniforme par équipement utilisateur,

Les valeurs de puissance d'émission possibles par zone de puissance d'émission Z sont construites avec $\Delta$ = $10^{-4}$

Schéma SISO; protocole ARQ tronqué avec nombre maximal de retransmissions $Tr$ = 10;

Les transmissions se font avec une récurrence de $T = Tr$

Les résultats de cette simulation sont représentés à la figure 5 où la courbe MPS (Multiple Power Shades) représente le nombre moyen d'équipements utilisateurs UE$_N$ qui arrivent à transmettre avec succès leurs paquets de données en fonction de la charge du réseau lorsque le procédé selon l'invention est mis en œuvre ; et SPL (Single Power Level) représente le nombre moyen d'équipements utilisateurs UE$_N$ qui arrivent à transmettre avec succès leurs paquets de données en fonction de la charge du réseau lorsque le procédé selon l'art antérieur est mis en œuvre.

La **[fig. 6]** représente un équipement utilisateur UE$_N$ selon un mode de réalisation de l'invention. Un tel équipement utilisateur UE$_N$ est apte à mettre en œuvre les différents modes de réalisation du procédé décrits en référence aux figures 2 et 4.

Un équipement utilisateur UE$_N$ peut comprendre au moins un processeur matériel 601, une unité de stockage 602, un dispositif de saisie 603, un dispositif d'affichage 604, une interface 605, et au moins une interface de réseau 606 qui sont connectés entre eux au travers d'un bus 607. Bien entendu, les éléments constitutifs de l'équipement utilisateur UE$_N$ peuvent être connectés au moyen d'une connexion autre qu'un bus.

Le processeur 601 commande les opérations de l'équipement utilisateur UE$_N$. L'unité de stockage 602 stocke au moins un programme pour la mise en œuvre du procédé selon un mode de réalisation de l'invention à exécuter par le processeur 601, et diverses données, telles que des paramètres utilisés pour des calculs effectués par le processeur 601, des données intermédiaires de calculs effectués par le processeur 601, etc. Le processeur 601 peut être formé par tout matériel ou logiciel connu et approprié, ou par une combinaison de matériel et de logiciel. Par exemple, le processeur 601 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 602 peut être formée par n'importe quel moyen approprié capable de stocker le programme ou les programmes et des données d'une manière lisible par un ordinateur. Des exemples d'unité de stockage 602 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 603 peut être formé par un clavier, un dispositif de pointage tel qu'une souris à utiliser par un utilisateur pour entrer des commandes. Le dispositif d'affichage 604 peut être également formé par un module d'affichage, tel que par exemple une interface graphique utilisateur ou GUI (pour *Graphical User Interface*).

L'interface 605 fournit une interface entre l'équipement utilisateur $UE_N$ et un autre équipement non représenté sur la figure.

Au moins une interface réseau 606 fournit une connexion entre l'équipement utilisateur $UE_N$ et la station de base BST via une connexion radio.

La **[fig. 7]** représente une station de base BST selon un mode de réalisation de l'invention. Une telle station de base BST est apte à mettre en œuvre les différents modes de réalisation du procédé décrits en référence aux figures 2 et 4.

Une station de base BST peut comprendre au moins un processeur matériel 701, une unité de stockage 702, un dispositif de saisie 703, un dispositif d'affichage 704, une interface 705, et au moins une interface de réseau 706 qui sont connectés entre eux au travers d'un bus 707. Bien entendu, les éléments constitutifs de la station de base BST peuvent être connectés au moyen d'une connexion autre qu'un bus.

Le processeur 701 commande les opérations de la station de base BST. L'unité de stockage 702 stocke au moins un programme pour la mise en œuvre du procédé selon un mode de réalisation de l'invention à exécuter par le processeur 701, et diverses données, telles que des paramètres utilisés pour des calculs effectués par le processeur 701, des données intermédiaires de calculs effectués par le processeur 701, etc. Le processeur 701 peut être formé par tout matériel ou logiciel connu et approprié, ou par une combinaison de matériel et de logiciel. Par exemple, le processeur 701 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 702 peut être formée par n'importe quel moyen approprié capable de stocker le programme ou les programmes et des données d'une manière lisible par un ordinateur. Des exemples d'unité de stockage 702 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 703 peut être formé par un clavier, un dispositif de pointage tel qu'une souris à utiliser par un utilisateur pour entrer des commandes. Le dispositif d'affichage 704 peut être également formé par un module d'affichage, tel que par exemple une interface graphique utilisateur ou GUI (pour *Graphical User Interface*).

L'interface 705 fournit une interface entre la station de base BST et un autre équipement non représenté sur la figure.

Au moins une interface réseau 706 fournit une connexion entre la station de base BST et au moins un équipement utilisateur $UE_N$ via une connexion radio.

## Revendications

1. Procédé de sélection d'une valeur de puissance d'émission d'un signal radio mis en œuvre par au moins un équipement utilisateur situé dans une première zone de puissance d'émission définie autour d'une station de base à laquelle ledit équipement utilisateur est attaché, ledit procédé comprenant les étapes suivantes de :

   - obtention d'une pluralité de valeurs de puissance d'émission possibles pour ladite première zone de puissance d'émission, lesdites valeurs de puissance d'émission possibles pour ladite première zone étant déterminées en fonction d'au moins :

     * une valeur de puissance d'émission de référence pour ladite première zone de puissance d'émission,
     * une valeur de puissance d'émission de référence pour au moins une deuxième zone de puissance d'émission définie autour de ladite station de base et adjacente à la première zone de puissance d'émission,
     * une valeur d'un pas de discrétisation définissant un niveau de disparité entre les valeurs de puissances possibles, et

**14**

- sélection d'une valeur de puissance d'émission parmi ladite pluralité de valeurs de puissance d'émission possibles pour ladite première zone de puissance d'émission.

2. Procédé de sélection d'une valeur de puissance d'émission d'un signal radio selon la revendication 1 dans lequel la sélection d'une valeur de puissance d'émission parmi ladite pluralité de valeurs de puissance d'émission possibles pour ladite première zone de puissance d'émission se fait selon une loi de probabilité discrète.

3. Procédé de sélection d'une valeur de puissance d'émission d'un signal radio selon la revendication 1 dans lequel l'étape d'obtention de la pluralité de valeurs de puissance d'émission possibles pour ladite première zone de puissance d'émission consiste en la réception d'au moins un message émis par la station de base comprenant ladite pluralité de valeurs de puissance d'émission possibles pour ladite première zone de puissance d'émission.

4. Procédé de sélection d'une valeur de puissance d'émission d'un signal radio selon la revendication 2 dans lequel au moins un message émis par la station de base comprend également la loi de probabilité discrète selon laquelle une valeur de puissance d'émission est sélectionnée parmi ladite pluralité de valeurs de puissance d'émission possibles pour ladite première zone de puissance d'émission.

5. Procédé de sélection d'une valeur de puissance d'émission d'un signal radio selon la revendication 1 dans lequel l'étape d'obtention de la pluralité de valeurs de puissance d'émission possibles pour ladite première zone de puissance d'émission consiste en :

   - la réception d'au moins un message émis par la station de base comprenant, entre autre, la valeur de puissance d'émission de référence pour ladite première zone de puissance d'émission, la valeur de puissance d'émission de référence pour au moins une deuxième zone de puissance d'émission définie autour de ladite station de base et adjacente à la première zone de puissance d'émission, une valeur d'un pas de discrétisation définissant un niveau de disparité entre les valeurs de puissances possibles,
   - la détermination desdites valeurs de puissance d'émission possibles pour ladite première zone en fonction des données comprises dans ledit au moins un message reçu.

6. Procédé de sélection d'une valeur de puissance d'émission d'un signal radio selon la revendication 2 et la revendication 5 prises en combinaison comprenant en outre une étape de détermination de la loi de probabilité discrète selon laquelle une valeur de puissance d'émission est sélectionnée parmi ladite pluralité de valeurs de puissance d'émission possibles pour ladite première zone de puissance d'émission en fonction de paramètres relatifs à ladite loi de probabilité discrète compris dans le au moins un message reçu.

7. Procédé de sélection d'une valeur de puissance d'émission d'un signal radio selon l'une quelconque des revendications précédentes, comprenant préalablement à l'étape d'obtention :

   - une étape de mesure de signaux radio de référence transmis par la station de base

   - une étape de détermination d'un coefficient $\alpha_k^2$ en fonction des signaux radio de référence

   - une étape de détermination, en fonction du coefficient $\alpha_k^2$, d'une distance effective séparant l'équipement utilisateur de la station de base, ladite distance effective identifiant la zone de puissance d'émission dans laquelle l'équipement utilisateur est situé.

8. Procédé de détermination d'une pluralité de valeurs possibles de puissance d'émission d'un signal radio, ledit signal radio étant destiné à être émis par au moins un équipement utilisateur situé dans une première zone de puissance d'émission définie autour d'une station de base à laquelle ledit équipement utilisateur est attaché, ledit procédé étant mis en œuvre par la station de base et comprenant les étapes suivantes de :

   - détermination de la pluralité de valeurs possibles de puissance d'émission pour ladite première zone de puissance d'émission, lesdites valeurs possibles de puissance d'émission pour ladite première zone étant déterminées en fonction d'au moins :

      * une valeur de puissance d'émission de référence pour ladite première zone de puissance d'émission,
      * une valeur de puissance d'émission de référence pour au moins une deuxième zone de puissance d'émission définie autour de ladite station de base et adjacente à la première zone de puissance d'émission,

* une valeur d'un pas de discrétisation définissant un niveau de disparité entre les valeurs de puissances possibles, et

- transmission de ladite pluralité de valeurs possibles de puissance d'émission pour ladite première zone de puissance d'émission audit au moins un équipement utilisateur.

9. Procédé de détermination d'une pluralité de valeurs de puissance d'émission d'un signal radio possibles selon la revendication 8 comprenant en outre :

- une étape de détermination d'une loi de probabilité discrète selon laquelle ledit au moins équipement utilisateur sélectionne une valeur de puissance d'émission parmi ladite pluralité de valeurs possibles de puissance d'émission pour ladite première zone de puissance d'émission,
- une étape de transmission de ladite loi de probabilité discrète audit au moins un équipement utilisateur.

10. Equipement utilisateur situé dans une première zone de puissance d'émission définie autour d'une station de base à laquelle il est attaché, ledit équipement utilisateur comprenant au moins un processeur configurer pour :

- obtenir une pluralité de valeurs possibles de puissance d'émission d'un signal radio pour ladite première zone de puissance d'émission, lesdites valeurs possibles de puissance d'émission d'un signal radio pour ladite première zone étant déterminées en fonction d'au moins :

* une valeur de puissance d'émission de référence pour ladite première zone de puissance d'émission,
* une valeur de puissance d'émission de référence pour au moins une deuxième zone de puissance d'émission définie autour de ladite station de base et adjacente à la première zone de puissance d'émission,
* une valeur d'un pas de discrétisation définissant un niveau de disparité entre les valeurs de puissances possibles, et

- sélectionner une valeur de puissance d'émission d'un signal radio parmi ladite pluralité de valeurs possibles de puissance d'émission d'un signal radio pour ladite première zone de puissance d'émission.

11. Station de base capable de déterminer une pluralité de valeurs de puissance d'émission d'un signal radio possibles, ledit signal radio étant destiné à être émis par au moins un équipement utilisateur situé dans une première zone de puissance d'émission définie autour de ladite station de base à laquelle ledit équipement utilisateur est attaché, la station de base comprenant au moins un processeur configuré pour :

- déterminer la pluralité de valeurs possibles de puissance d'émission pour ladite première zone de puissance d'émission, lesdites valeurs possibles de puissance d'émission pour ladite première zone étant déterminées en fonction d'au moins :

* une valeur de puissance d'émission de référence pour ladite première zone de puissance d'émission,
* une valeur de puissance d'émission de référence pour au moins une deuxième zone de puissance d'émission définie autour de ladite station de base et adjacente à la première zone de puissance d'émission,
* une valeur d'un pas de discrétisation définissant un niveau de disparité entre les valeurs de puissances possibles, et

- transmettre ladite pluralité de valeurs possibles de puissance d'émission pour ladite première zone de puissance d'émission audit au moins un équipement utilisateur.

12. Produit programme d'ordinateur comprenant des instructions de code de programme pour la mise en œuvre d'un procédé selon la revendication 1, lorsqu'il est exécuté par un processeur.

13. Produit programme d'ordinateur comprenant des instructions de code de programme pour la mise en œuvre d'un procédé selon la revendication 8, lorsqu'il est exécuté par un processeur.

**Patentansprüche**

1. Verfahren zur Auswahl eines Sendeleistungswerts eines Funksignals, das von mindestens einem Benutzergerät verwendet wird, das sich in einem ersten Sendeleistungsbereich befindet, der um eine Basisstation herum definiert ist, an die das Benutzergerät angeschlossen ist, wobei das Verfahren die folgenden Schritte umfasst:

- Erhalten einer Vielzahl möglicher Sendeleistungswerte für den ersten Sendeleistungsbereich, wobei die möglichen Sendeleistungswerte für den ersten Bereich in Abhängigkeit von mindestens folgenden Faktoren bestimmt werden:

* einem Bezugssendeleistungswert für den ersten Sendeleistungsbereich,
* einem Bezugssendeleistungswert für mindestens einen zweiten Sendeleistungsbereich, der um die Basisstation herum und an den ersten Sendeleistungsbereich angrenzend definiert ist,
* einem Wert eines Diskretisierungsschritts, der einen Grad der Disparität zwischen den möglichen Leistungswerten definiert, und

- Auswählen eines Sendeleistungswerts aus der Vielzahl möglicher Sendeleistungswerte für den ersten Sendeleistungsbereich.

2. Verfahren zur Auswahl eines Sendeleistungswerts eines Funksignals nach Anspruch 1, bei dem die Auswahl eines Sendeleistungswerts aus der Vielzahl möglicher Sendeleistungswerte für den ersten Sendeleistungsbereich nach einem diskreten Wahrscheinlichkeitsgesetz erfolgt.

3. Verfahren zur Auswahl eines Sendeleistungswerts eines Funksignals nach Anspruch 1, wobei der Schritt des Erhaltens der Vielzahl möglicher Sendeleistungswerte für den ersten Sendeleistungsbereich darin besteht, mindestens eine von der Basisstation gesendete Nachricht zu empfangen, die die Vielzahl möglicher Sendeleistungswerte für den ersten Sendeleistungsbereich umfasst.

4. Verfahren zur Auswahl eines Sendeleistungswerts eines Funksignals nach Anspruch 2, wobei mindestens eine von der Basisstation gesendete Nachricht auch das diskrete Wahrscheinlichkeitsgesetz umfasst, nach dem ein Sendeleistungswert aus der Vielzahl möglicher Sendeleistungswerte für den ersten Sendeleistungsbereich ausgewählt wird.

5. Verfahren zur Auswahl eines Sendeleistungswerts eines Funksignals nach Anspruch 1, bei dem der Schritt des Erhaltens der Vielzahl möglicher Sendeleistungswerte für den ersten Sendeleistungsbereich besteht aus:

- dem Empfang mindestens einer von der Basisstation gesendeten Nachricht, die unter anderem den Bezugssendeleistungswert für den ersten Sendeleistungsbereich, den Bezugssendeleistungswert für mindestens einen zweiten Sendeleistungsbereich, der um die Basisstation herum und an den ersten Sendeleistungsbereich angrenzend definiert ist, einen Wert eines Diskretisierungsschritts, der einen Disparitätsgrad zwischen den möglichen Leistungswerten definiert, umfasst,
- der Bestimmung der möglichen Sendeleistungswerte für den ersten Bereich in Abhängigkeit von den in der mindestens einen empfangenen Nachricht umfassten Daten.

6. Verfahren zur Auswahl eines Sendeleistungswerts eines Funksignals nach Anspruch 2 und Anspruch 5 in Kombination, ferner umfassend einen Schritt zur Bestimmung des diskreten Wahrscheinlichkeitsgesetzes, nach dem ein Sendeleistungswert aus der Vielzahl möglicher Sendeleistungswerte für den ersten Sendeleistungsbereich in Abhängigkeit von Parametern bezüglich des diskreten Wahrscheinlichkeitsgesetzes, die in der mindestens einen empfangenen Nachricht umfasst sind, ausgewählt wird.

7. Verfahren zur Auswahl eines Sendeleistungswerts eines Funksignals nach einem der vorhergehenden Ansprüche, das vor dem Schritt des Erhaltens umfasst:

- einen Schritt des Messens von von der Basisstation gesendeten Bezugsfunksignalen

- einen Schritt des Bestimmens eines Koeffizienten $\alpha_k^2$ in Abhängigkeit von den Bezugsfunksignalen
- einen Schritt zur Bestimmung einer effektiven Entfernung zwischen dem Benutzergerät und der Basisstation in Abhängigkeit von dem Koeffizienten $\alpha_k^2$, wobei die effektive Entfernung den Sendeleistungsbereich identifiziert, in dem sich das Benutzergerät befindet.

8. Verfahren zur Bestimmung einer Vielzahl möglicher Werte der Sendeleistung eines Funksignals, wobei das Funksignal von mindestens einem Benutzergerät gesendet werden soll, das sich in einem ersten Sendeleistungsbereich befindet, der um eine Basisstation herum definiert ist, an die das Benutzergerät angeschlossen ist, wobei das Verfahren von der Basisstation durchgeführt wird und die folgenden Schritte umfasst:

- Bestimmung der Vielzahl möglicher Sendeleistungswerte für den ersten Sendeleistungsbereich, wobei die möglichen Sendeleistungswerte für den ersten Bereich in Abhängigkeit von mindestens folgenden Werten bestimmt werden:

    * einem Bezugssendeleistungswert für den ersten Sendeleistungsbereich,
    * einem Bezugssendeleistungswert für mindestens einen zweiten Sendeleistungsbereich, der um die Basisstation herum und an den ersten Sendeleistungsbereich angrenzend definiert ist,
    * einem Wert eines Diskretisierungsschritts, der einen Grad der Disparität zwischen den möglichen Leistungswerten definiert, und

- Übertragung der Vielzahl möglicher Sendeleistungswerte für den ersten Sendeleistungsbereich an das mindestens eine Benutzergerät.

9. Verfahren zur Bestimmung einer Vielzahl möglicher Sendeleistungswerte eines Funksignals nach Anspruch 8, ferner umfassend:

    * einen Schritt zur Bestimmung eines diskreten Wahrscheinlichkeitsgesetzes, nach dem das mindestens eine Benutzergerät einen Sendeleistungswert aus der Vielzahl möglicher Sendeleistungswerte für den ersten Sendeleistungsbereich auswählt,
    - einen Schritt zur Übertragung des diskreten Wahrscheinlichkeitsgesetzes an das mindestens eine Benutzergerät.

10. Benutzergerät, das sich in einem ersten Sendeleistungsbereich befindet, der um eine Basisstation herum definiert ist, an die es angeschlossen ist, wobei das Benutzergerät mindestens einen Prozessor umfasst, der konfiguriert ist, um:

- eine Vielzahl möglicher Werte der Sendeleistung eines Funksignals für den ersten Sendeleistungsbereich zu erhalten, wobei die möglichen Werte der Sendeleistung eines Funksignals für den ersten Bereich in Abhängigkeit von mindestens Folgendem bestimmt werden:

    * einem Bezugssendeleistungswert für den ersten Sendeleistungsbereich,
    * einem Bezugssendeleistungswert für mindestens einen zweiten Sendeleistungsbereich, der um die Basisstation herum und an den ersten Sendeleistungsbereich angrenzend definiert ist,
    * einem Wert eines Diskretisierungsschritts, der einen Grad der Disparität zwischen den möglichen Leistungswerten definiert, und

- einen Wert der Sendeleistung eines Funksignals aus der Vielzahl möglicher Werte der Sendeleistung eines Funksignals für den ersten Sendeleistungsbereich auszuwählen.

11. Basisstation, die in der Lage ist, eine Vielzahl möglicher Sendeleistungswerte eines Funksignals zu bestimmen, wobei das Funksignal dazu bestimmt ist, von mindestens einem Benutzergerät gesendet zu werden, das sich in einem ersten Sendeleistungsbereich befindet, der um die Basisstation herum definiert ist, an die das Benutzergerät angeschlossen ist, wobei die Basisstation mindestens einen Prozessor umfasst, der konfiguriert ist, um:

- die Vielzahl möglicher Sendeleistungswerte für den ersten Sendeleistungsbereich zu bestimmen, wobei die möglichen Sendeleistungswerte für den ersten Bereich in Abhängigkeit von mindestens folgenden Werten bestimmt werden:

    * einem Bezugssendeleistungswert für den ersten Sendeleistungsbereich,
    * einem Bezugssendeleistungswert für mindestens einen zweiten Sendeleistungsbereich, der um die Basisstation herum und an den ersten Sendeleistungsbereich angrenzend definiert ist,
    * einem Wert eines Diskretisierungsschritts, der einen Grad der Disparität zwischen den möglichen Leistungswerten definiert, und

- die Vielzahl möglicher Sendeleistungswerte für den ersten Sendeleistungsbereich an das mindestens eine Benutzergerät zu übertragen.

12. Computerprogrammprodukt, umfassend Programmcodeanweisungen zur Durchführung eines Verfahrens nach Anspruch 1, wenn es von einem Prozessor ausgeführt wird.

13. Computerprogrammprodukt, umfassend Programmcodeanweisungen zur Durchführung eines Verfahrens nach Anspruch 8, wenn es von einem Prozessor ausgeführt wird.

**Claims**

1. Method for selecting an emit power value of a radio signal implemented by at least one user equipment located in a first emit power zone defined around a base station to which said user equipment is attached, said method comprising the following steps:

   - obtaining a plurality of emit power values possible for said first emit power zone, said emit power values possible for said first zone being determined depending on at least:

      - a reference emit power value for said first emit power zone,
      - a reference emit power value for at least one second emit power zone defined around said base station and adjacent to the first emit power zone,
      - a value of a discretization increment defining a level of disparity between the possible power values, and
      - selecting an emit power value from said plurality of emit power values possible for said first emit power zone.

2. Method for selecting an emit power value of a radio signal according to Claim 1, wherein an emit power value is selected from said plurality of emit power values possible for said first emit power zone according to a discrete probability distribution.

3. Method for selecting an emit power value of a radio signal according to Claim 1, wherein the step of obtaining the plurality of emit power values possible for said first emit power zone consists in receiving at least one message sent by the base station containing said plurality of emit power values possible for said first emit power zone.

4. Method for selecting an emit power value of a radio signal according to Claim 2, wherein at least one message sent by the base station also contains the discrete probability distribution according to which an emit power value is selected from said plurality of emit power values possible for said first emit power zone.

5. Method for selecting an emit power value of a radio signal according to Claim 1, wherein the step of obtaining the plurality of emit power values possible for said first emit power zone consists in:

   - receiving at least one message sent by the base station containing, inter alia, the reference emit power value for said first emit power zone, the reference emit power value for at least one second emit power zone defined around said base station and adjacent to the first emit power zone, a value of a discretization increment defining a level of disparity between the possible power values,
   - determining said emit power values possible for said first zone depending on the data contained in said at least one received message.

6. Method for selecting an emit power value of a radio signal according to Claim 2 and Claim 5 in combination, further comprising a step of determining the discrete probability distribution according to which an emit power value is selected from said plurality of emit power values possible for said first emit power zone depending on parameters relating to said discrete probability distribution contained in the at least one received message.

7. Method for selecting an emit power value of a radio signal according to any of the preceding claims, comprising, prior to the obtaining step:

   - a step of measuring reference radio signals transmitted by the base station,

   - a step of determining a coefficient $\alpha_k^2$ depending on the reference radio signals

- a step of determining, depending on the coefficient $\alpha_k^2$, an effective distance separating the user equipment from the base station, said effective distance identifying the emit power zone in which the user equipment is located.

8. Method for determining a plurality of possible emit power values of a radio signal, said radio signal being intended to be emitted by at least one user equipment located in a first emit power zone defined around a base station to which said user equipment is attached, said method being implemented by the base station and comprising the following steps:

- determining the plurality of emit power values possible for said first emit power zone, said emit power values possible for said first zone being determined depending on at least:

  - a reference emit power value for said first emit power zone,
  - a reference emit power value for at least one second emit power zone defined around said base station and adjacent to the first emit power zone,
  - a value of a discretization increment defining a level of disparity between the possible power values, and
  - transmitting said plurality of emit power values possible for said first emit power zone to said at least one user equipment.

9. Method for determining a plurality of possible emit power values of a radio signal according to Claim 8, further comprising:

  - a step of determining a discrete probability distribution according to which said at least one user equipment selects an emit power value from said plurality of emit power values possible for said first emit power zone,
  - a step of transmitting said discrete probability distribution to said at least one user equipment.

10. User equipment located in a first emit power zone defined around a base station to which it is attached, said user equipment comprising at least one processor configured to:

  - obtain a plurality of possible emit power values of a radio signal for said first emit power zone, said possible emit power values of a radio signal for said first zone being determined depending on at least:

    - a reference emit power value for said first emit power zone,
    - a reference emit power value for at least one second emit power zone defined around said base station and adjacent to the first emit power zone,
    - a value of a discretization increment defining a level of disparity between the possible power values, and
    - select an emit power value of a radio signal from said plurality of possible emit power values of a radio signal for said first emit power zone.

11. Base station capable of determining a plurality of possible emit power values of a radio signal, said radio signal being intended to be emitted by at least one user equipment located in a first emit power zone defined around said base station to which said user equipment is attached, the base station comprising at least one processor configured to:

  - determine the plurality of emit power values possible for said first emit power zone, said emit power values possible for said first zone being determined depending on at least:

    - a reference emit power value for said first emit power zone,
    - a reference emit power value for at least one second emit power zone defined around said base station and adjacent to the first emit power zone,
    - a value of a discretization increment defining a level of disparity between the possible power values, and
    - transmit said plurality of emit power values possible for said first emit power zone to said at least one user equipment.

12. Computer program product comprising program code instructions for implementing a method according to Claim 1 when it is executed by a processor.

13. Computer program product comprising program code instructions for implementing a method according to Claim 8 when it is executed by a processor.

Fig.1

Fig.2

Fig.4

Fig.3

Fig.5

Fig.6

Fig.7

## RÉFÉRENCES CITÉES DANS LA DESCRIPTION

**Documents brevets cités dans la description**

- US 20140016576 A

- US 2004266473 A

**Littérature non-brevet citée dans la description**

- **J. CHOI**. NOMA-based random access with multichannel ALOHA. *IEEE Journal on Selected Areas in Commun.*, December 2017, vol. 35 (12), 2736-2743